(19) Europäisches Patentamt
European Patent Office
Office européen des brevets

(11) EP 1 485 431 B1

(12) # FASCICULE DE BREVET EUROPEEN

(45) Date de publication et mention de la délivrance du brevet:
**31.10.2007 Bulletin 2007/44**

(21) Numéro de dépôt: **03725298.8**

(22) Date de dépôt: **18.03.2003**

(51) Int Cl.:
***C08J 9/28*** *(2006.01)*

(86) Numéro de dépôt international:
**PCT/FR2003/000857**

(87) Numéro de publication internationale:
**WO 2003/078505 (25.09.2003 Gazette 2003/39)**

(54) **AEROGEL A BASE D'UN POLYMERE OU COPOLYMERE HYDROCARBONE ET SON PROCEDE DE PREPARATION**

AEROGEL AUF BASIS VON KOHLENWASSERSTOFF-POLYMER ODER -COPOLYMER UND HERSTELLUNGSVERFAHREN

HYDROCARBON COPOLYMER OR POLYMER BASED AEROGEL AND METHOD FOR THE PREPARATION THEREOF

(84) Etats contractants désignés:
**AT BE BG CH CY CZ DE DK EE ES FI FR GB GR HU IE IT LI LU MC NL PT RO SE SI SK TR**

(30) Priorité: **20.03.2002 FR 0203462**

(43) Date de publication de la demande:
**15.12.2004 Bulletin 2004/51**

(73) Titulaire: **COMMISSARIAT A L'ENERGIE ATOMIQUE**
**75015 Paris (FR)**

(72) Inventeurs:
- **KOCON, Laurent**
  **F-37260 Artannes sur Indre (FR)**
- **WIECZOREK, Laurent**
  **F-92410 Ville D'avray (FR)**

(74) Mandataire: **Poulin, Gérard et al**
**Société BREVATOME**
**3, rue du Docteur Lancereaux**
**75008 Paris (FR)**

(56) Documents cités:
**US-A- 5 990 184**

- **PATENT ABSTRACTS OF JAPAN vol. 016, no. 277 (C-0954), 22 juin 1992 (1992-06-22) & JP 04 071603 A (KAO CORP), 6 mars 1992 (1992-03-06)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

### DOMAINE TECHNIQUE

La présente invention a pour objet des aérogels organiques obtenus notamment à partir de monomères hydrocarbonés possédant des fonctions éthyléniques et un procédé de préparation de ceux-ci.

Le domaine de l'invention est donc celui des aérogels.

Communément, les aérogels désignent des matériaux microcellulaires à faible densité, présentant une porosité continue, une taille de pores pouvant être inférieure à 50 nm et une surface spécifique très élevée pouvant être de l'ordre de 400 à 1000 $m^2$/g. De ce fait, les aérogels trouvent leur application dans de nombreux domaines.

Ainsi, dans le domaine de l'acoustique ou de la thermique, les aérogels peuvent être utilisés en tant qu'isolants, dans la mesure où la taille des pores constitutifs des aérogels est suffisamment faible pour piéger les molécules d'air et la porosité suffisamment élevée pour emprisonner une quantité importante desdites molécules.

### ETAT DE LA TECHNIQUE

En raison de leurs applications multiples, les aérogels ont fait l'objet de nombreux développements dans l'art antérieur.

Les aérogels les plus couramment utilisés sont des aérogels à base de silice préparés par un procédé sol-gel comprenant successivement une étape d'hydrolyse suivie d'une condensation de précurseurs de silicium, tels que le tétraméthoxysilane, le tétraéthoxysilane et d'une étape de séchage de l'alcogel réalisé dans des conditions telles que la structure fractale du gel puisse être conservée à l'issue du séchage.

D'autres aérogels ont été mis au point, notamment des aérogels organiques issus de monomères couramment utilisés dans la synthèse de matières plastiques dites thermodurcissables.

Ainsi, le brevet US 4997804 [1] décrit un procédé de synthèse d'aérogels, dérivé directement de la chimie des phénoplastes, ledit procédé comprenant une étape de polycondensation de polyhydroxybenzènes tels que le résorcinol, avec le formaldéhyde, suivie d'un échange de solvant pour remplacer le solvant d'origine, généralement l'eau par un solvant miscible avec le $CO_2$, ce qui constitue une condition indispensable pour effectuer par la suite un séchage supercritique au $CO_2$.

La publication « Melamine-Formaldehyde Aerogels », Polym.Prepr, 32, (1991), 242, [2] décrit la production d'aérogels par polycondensation de formaldéhyde et de mélamine.

Enfin, le brevet US 5 990 184 [3] et les demandes de brevet WO 95/03358 [4], WO 96/36654 [5] et WO 96/37539 [6] font état de méthodes de préparation d'aérogels par polymérisation d'isocyanates.

Toutefois, les aérogels de l'art antérieur présentent tous un ou plusieurs des inconvénients suivants :

- Ils constituent des aérogels relativement hydrophiles, du fait que les précurseurs ou monomères de départ sont relativement polaires. En particulier, les aérogels de type phénoplaste sont synthétisés dans un solvant non miscible au $CO_2$, ce qui nécessite une étape d'échange de solvant supplémentaire ;
- Ils sont élaborés à partir de précurseurs dont les polymères correspondants présentent des conductivités thermiques supérieures à celles de polymères hydrocarbonés tels que le polystyrène, entre 0,3 et 0,7 $W.m^{-1}.K^{-1}$ pour les phénoplastes, de l'ordre de 0,25 $W.m^{-1}.K^{-1}$ pour les polyuréthanes, alors que la conductivité thermique de polymères tels que le polystyrène est généralement comprise entre 0,12 et 0,18 $W.m^{-1}.K^{-1}$.

### EXPOSE DE L'INVENTION

Le but de la présente invention est de proposer de nouveaux aérogels à base de polymère ou copolymère obtenus par polymérisation de monomères essentiellement hydrocarbonés, qui ne présentent pas les inconvénients précités et qui combinent notamment à la fois les propriétés liées aux caractéristiques intrinsèques du polymère ou copolymère et celles liées à la texture aérogel dudit polymère ou copolymère.

Le but de la présente invention est de proposer également des procédés de préparation de tels aérogels.

Selon un premier objet, la présente invention a pour but un aérogel à base d'un polymère obtenu par polymérisation d'au moins un monomère hydrocarboné aliphatique ou aromatique, éventuellement substitué par un ou plusieurs atomes d'halogène, ledit monomère comportant au moins deux fonctions éthyléniques.

Selon un second objet, la présente invention a pour but un aérogel à base d'un copolymère obtenu par polymérisation d'au moins un monomère hydrocarboné aliphatique ou aromatique, éventuellement substitué par un ou plusieurs atomes d'halogène, ledit monomère comportant au moins deux fonctions éthyléniques, et d'au moins un comonomère polymérisable avec ledit monomère.

Selon l'invention, le ou les monomères hydrocarbonés aliphatiques comportant au moins deux fonctions éthyléniques peuvent être choisis dans le groupe de composés constitué par le butadiène, l'isoprène, le pentadiène, l'hexadiène, le méthylpentadiène, le cyclohexadiène, l'heptadiène, le méthylhexadiène, le 1,3,5-hexatriène et les mélanges de ceux-ci, lesdits composés étant éventuellement substitués par un ou plusieurs atomes d'halogène tels que le chlore, le brome ou l'iode.

De préférence, le (les) monomère(s) hydrocarboné(s) comportant au moins deux fonctions éthyléniques est (sont) un (des) monomère(s) aromatique(s), éventuellement substitués par un ou plusieurs atomes d'halogènes tels que le chlore, le brome ou l'iode. Encore plus préférentiellement, les monomères aromatiques sont des monomères styréniques comprenant au moins deux fonctions éthyléniques choisis, par exemple, parmi les isomères méta ou para du divinylbenzène, le trivinylbenzène et les mélanges de ceux-ci.

On précise que, par isomères méta ou para du divinylbenzène et par trivinylbenzène, on entend les composés répondant aux formules suivantes :

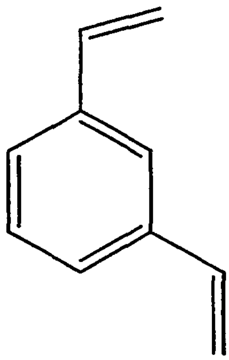
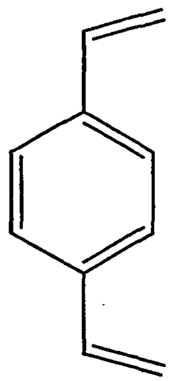
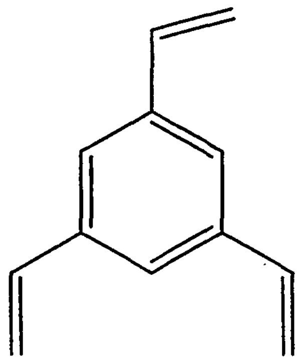

Avec des monomères hydrocarbonés tels que définis ci-dessus, on obtient ainsi des aérogels pouvant présenter d'excellentes propriétés d'isolation thermique, du fait que le polymère organique constitutif de l'aérogel présente une très bonne conductivité thermique pouvant être de l'ordre de 0,12 à 0,18 $W.m^{-1}.K^{-1}$ et que la structure de type aérogel est particulièrement adaptée à la non propagation de la chaleur.

De plus, grâce au caractère fortement hydrophobe de tels aérogels, des applications en tant que membranes microporeuses peuvent également être envisagées avec ces aérogels.

Concernant l'aérogel du second objet, le comonomère peut être choisi dans le groupe constitué par le styrène, l'$\alpha$-méthylstyrène, l'éthylstyrène, l'anhydride maléique, l'acrylonitrile, les esters acryliques et les mélanges de ceux-ci.

Ces comonomères peuvent ainsi contribuer à modifier la texture ou les propriétés intrinsèques du réseau solide qui constitue le squelette de l'aérogel.

Pour les aérogels de l'invention, l'on peut envisager la présence d'au moins l'un des additifs suivants choisis parmi les fibres minérales ou organiques, les mousses, les polymères tels que le polybutadiène.

L'on peut citer, par exemple, en tant que fibres minérales, les fibres de verre, de carbone, et en tant que fibres organiques les fibres de nylon, de rayonne, ces fibres pouvant remplir le rôle de composés de renforcement de l'aérogel.

On précise que selon l'invention, on entend par mousse un matériau organique dont la matière solide renferme un grand nombre de cavités de petits diamètres. A titre d'exemples, on peut citer comme mousse, les mousses de polyuréthane.

La présence d'additifs dans les aérogels de l'invention peut contribuer à modifier certaines propriétés macroscopiques optiques, thermiques, diélectriques ou mécaniques de l'aérogel. Ainsi, l'ajout de fibres permet d'améliorer les propriétés mécaniques de l'aérogel, la poudre de carbone en tant qu'opacifiant peut modifier la conductivité radiative de l'aérogel, voire ses propriétés diélectriques du fait de sa conductivité électrique.

Les aérogels selon l'invention, se présentent, généralement, sous forme de matériaux opaques de couleur blanche. La texture desdits aérogels peut être de nature colloïdale avec des tailles de particules pouvant aller de 5 à 100 nanomètres et des tailles de pores de 1 nanomètre à 1 micromètre. De plus, les aérogels de l'invention peuvent présenter des surfaces spécifiques élevées allant de 100 à 1500 $m^2/g$.

Un autre but de la présente invention est de proposer un procédé de préparation des aérogels précédemment décrits.

Ainsi, le procédé de préparation d'aérogels selon l'invention comprend la succession d'étapes suivantes :

a) formation d'un gel par polymérisation dans au moins un solvant organique d'un ou plusieurs monomères, tels que définis précédemment et éventuellement d'un ou plusieurs comonomères tels que définis précédemment; et

b) séchage du gel obtenu en a) dans des conditions supercritiques.

Selon l'invention, le ou les solvants organiques utilisés dans l'étape a) sont avantageusement des solvants qui permettent la solubilisation des monomères et des éventuels comonomères.

Selon l'invention dans l'étape a), le ou les monomères ainsi que le ou les éventuels comonomères sont présents avantageusement à raison de 0,5 à 50 % en poids par rapport au poids du ou des solvants organiques utilisés dans l'étape a), avec de préférence de 1 à 20 %, ce qui permet d'accéder à des aérogels dont la densité est comprise entre 0,02 et 0,5.

Avantageusement, la polymérisation envisagée au cours de l'étape a) pour former le gel est une polymérisation radicalaire. L'amorçage de ce type de polymérisation en milieu liquide peut s'envisager de différentes façons, notamment par autoamorçage.

Toutefois, selon le procédé de l'invention, l'on amorce, de préférence, la réaction de polymérisation radicalaire par ajout pendant l'étape a) d'au moins un amorceur chimique.

Par exemple, un amorceur chimique efficace dans le cadre de cette invention peut être un amorceur choisi dans le groupe constitué par l'azobisisobutyronitrile, le peroxyde de benzoyle, d'acétyle, de cumyle, de t-butyle et de lauryle, l'hydroperoxyde de t-butyle, le peracétate de t-butyle et les mélanges de ceux-ci.

La polymérisation radicalaire s'effectue, de préférence, à une température efficace pour assurer la décomposition thermique de l'amorceur chimique.

Dans le procédé selon l'invention, le choix du solvant et de l'éventuel amorceur, des concentrations en monomères déjà explicitées ci-dessus, des concentrations en amorceur, et de la température utilisée pour la polymérisation sont des paramètres importants car ils agissent directement sur la texture de l'aérogel obtenu.

L'ensemble de ces paramètres peut être déterminé par des essais accessibles à l'homme du métier en fonction des constituants utilisés dans l'étape a).

La proportion d'amorceur peut être déterminée non pas en fonction du nombre de moles de monomères ou comonomères mais en fonction du nombre de moles total de fonctions éthyléniques apportées par les monomères ou comonomères, certains pouvant effectivement contenir trois fonctions éthyléniques (par exemple, le trivinylbenzène) ou deux comme le divinylbenzène, voire une seule fonction éthylénique comme le styrène (remplissant le rôle de comonomère).

Selon l'invention, l'amorceur est présent avantageusement à raison de $5.10^{-4}$ à 0,5 en proportion molaire par rapport au nombre de moles de fonctions éthyléniques du (des) monomère(s) et éventuellement du(des) comonomère(s).

Toutefois, cette teneur dépend des monomères présents dans l'étape a) et de la température. La valeur optimale peut être déterminée par l'homme du métier, étant entendu que des valeurs trop faibles ou trop élevées peuvent être nuisibles à une bonne prise de gel. Ainsi, en utilisant, par exemple, dans l'étape a) du divinylbenzène en tant que monomère, l'AiBN en tant qu'amorceur chimique, et le toluène en tant que solvant, les inventeurs ont observé avec un pourcentage en monomère de 2 % à 85 °C l'apparition d'un précipité gélifiant pour des proportions d'amorceur inférieure à $2.10^{-3}$. Dans ce même système, avec un pourcentage de précurseur de 1%, aucune gélification n'a pu être observée avec une proportion d'amorceur de 0,6, alors qu'elle est effective à 0,13.

En ce qui concerne la température, dans le cas de l'utilisation d'un amorceur chimique pour démarrer la réaction de polymérisation, celle-ci doit, de préférence, permettre la décomposition thermique de ce dernier, par exemple, selon une cinétique correspondant à une constante de vitesse de dissociation kd comprise généralement entre $10^{-6}$ et $5 .10^{-3}$ $s^{-1}$ avec dans le cas de l' AiBN une préférence pour des valeurs allant de $3.10^{-5}$ $s^{-1}$, pour une température de 70 °C à $10^{-3}$ $s^{-1}$ pour une température de 100 °C.

A titre d'exemples, le tableau 1 expose les plages de température préconisées pour des amorceurs envisageables, pour réaliser le procédé selon l'invention.

TABLEAU 1.

| Amorceur | Plage de température |
|---|---|
| Peroxyde d'acétyle | 50°C<T<115°C |
| Peroxyde de benzoyle | 50°C<T<130°C |
| Peroxyde de cumyle | 95°C<T<160°C |
| Peroxyde de t-butyle | 100°C<T<185°C |
| Hydroperoxyde de t-butyle | 140°C<T<230°C |

Par exemple, lorsque la polymérisation est effectuée uniquement en présence de paradivinylbenzène en présence d'un amorceur chimique, l'étape a) du procédé, correspondant à la prise du gel selon l'invention, peut se dérouler selon la succession de réactions suivantes :

- une réaction de décomposition de l'amorceur noté $A_2$ en radicaux primaires A :

$$A \rightarrow 2A\cdot$$

- une réaction d'amorçage par formation de radicaux à partir de l'isomère para du divinylbenzène :

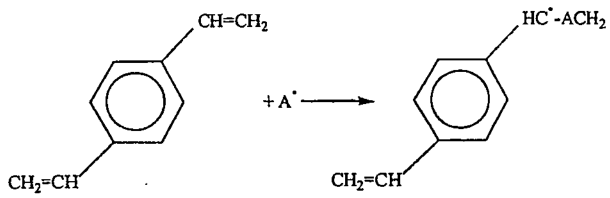

- une réaction de propagation, qui conduit à la formation d'un réseau solide :

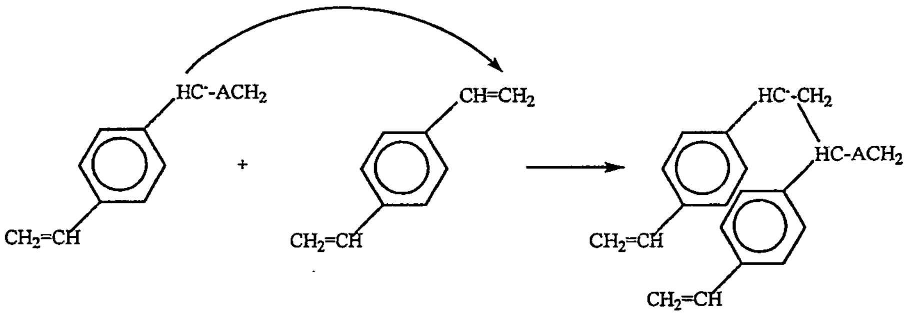

- une réaction de terminaison, qui conduit à la disparition des sites réactifs radicalaires situés sur les molécules :

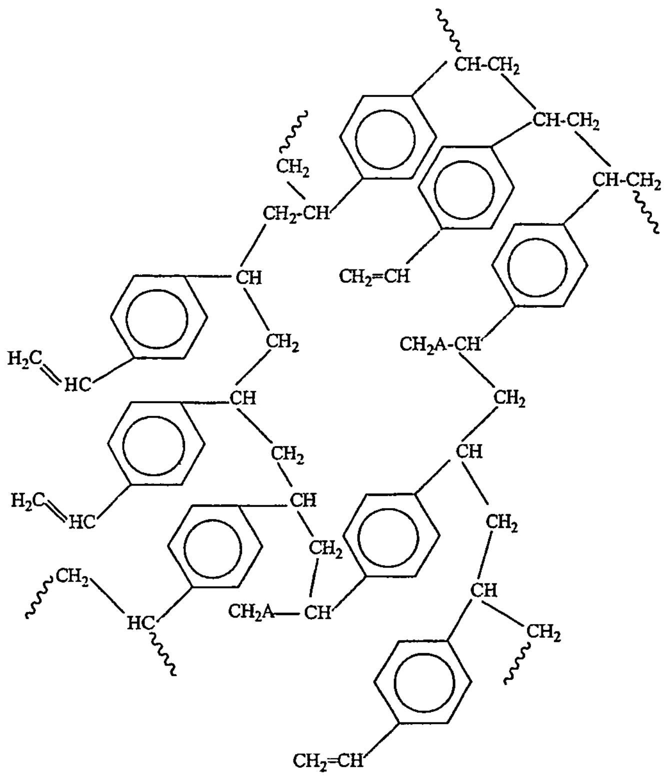

A l'issue de cette étape a), explicitée ci-dessus avec l'exemple du divinylbenzène, il se forme un gel organique de nature covalente, qui se présente sous la forme d'un réseau solide tridimensionnel qui percole dans tout le volume de la solution et emprisonne de ce fait le solvant malgré la nature ouverte de la porosité. En effet, la taille des cellules délimitée par le réseau solide tridimensionnel est suffisamment petite pour que le solvant reste à l'intérieur du réseau par simple effet capillaire.

La seconde étape du procédé, selon l'invention, consiste à sécher le gel obtenu au cours de l'étape a) sans détériorer le réseau solide.

Selon l'invention, cette étape s'effectue dans des conditions supercritiques, lesdites conditions supercritiques étant, de préférence, réalisées avec du dioxyde de carbone supercritique.

Dans ce cas, le ou les solvants organiques utilisés dans l'étapes a) sont miscibles avec le dioxyde de carbone. Ainsi, lors du séchage du gel par du dioxyde de carbone supercritique, ce type de solvants permet un échange direct avec du dioxyde de carbone, sans passer par une étape intermédiaire d'échange du ou des solvants utilisés dans l'étape a) par un solvant miscible avec le dioxyde de carbone.

De tels solvants peuvent être choisis parmi les hydrocarbures aliphatiques, tels que l'hexane, l'heptane, le cyclohexane, les hydrocarbures aromatiques tels que le benzène, l'éthylbenzène, l'isopropylbenzène, le t-butylbenzène, le toluène, les cétones tels que l'acétone, les aldéhydes, les alcools tels que le butanol, les éthers tels que l'éther éthylique, les esters, les acides carboxyliques éventuellement halogénés tels que l'acide acétique, et les mélanges de ceux-ci.

Selon ce mode de réalisation préférentielle, cette étape de séchage par du dioxyde de carbone supercritique comprend, avantageusement, successivement les opérations suivantes :

- échange du ou des solvants organiques contenus dans le gel préparé en a) par du $CO_2$ liquide ou supercritique ; et
- extraction du $CO_2$ par application d'une température et d'une pression sensiblement supérieures au point critique du $CO_2$.

L'étape de séchage supercritique s'effectue généralement en autoclave. Dans le cadre de ce séchage, l'opération d'échange de solvant peut s'effectuer en continu ou par remplissages et vidanges successifs de l'autoclave. L'opération suivante, consistant à extraire le $CO_2$ précédemment introduit, peut consister, selon l'invention, à chauffer et pressuriser l'autoclave afin de dépasser le point critique du $CO_2$, c'est-à-dire une température et une pression respectivement supérieures à 31,1 °C et à 7,3 MPa. Ces conditions étant atteintes, l'autoclave est dépressurisé lentement

à température constante, afin d'éviter tout phénomène de turbulence et de surpression à l'intérieur du matériau, qui pourrait entraîner une cassure au niveau du réseau solide constitutif du gel. Enfin, lorsque l'autoclave est à pression ambiante, il est refroidi à température ambiante.

Enfin, les aérogels selon l'invention peuvent être utilisés dans de nombreuses applications et notamment dans des matériaux isolants thermiquement ou acoustiquement.

Les aérogels selon l'invention peuvent être également utilisés dans des membranes microporeuses, du fait du caractère hydrophobe des monomères utilisés.

L'invention va maintenant être décrite à la lumière des exemples suivants donnés bien entendu à titre illustratif et non limitatif.

**BREVE DESCRIPTION DES FIGURES.**

La figure unique est un graphique représentant la relation entre la densité finale d de l'aérogel obtenu par polymérisation de l'isomère para du divinylbenzène et le pourcentage massique dudit divinylbenzène dans le milieu réactionnel (% DVB).

**EXPOSE DETAILLE DE MODES DE REALISATION PARTICULIERS.**

Les exemples qui suivent illustrent la préparation d'aérogels selon l'invention avec pour réactifs de départ :

- le divinylbenzène technique de chez Aldrich pur à 80% (correspondant à l'isomère para), comprenant de l'éthylstyrène et 1000 ppm de P-tert-butylcatéchol ;
- l'azobisisobutyronitrile, ou AiBN de chez Merck de pureté supérieure à 98 % ; et
- le toluène, préalablement distillé avant emploi.

Les surfaces spécifiques des aérogels obtenus, dans le cadre de ces exemples, sont obtenues au moyen d'un appareil BET Monosorb Quantochrome par mesure monopoint dynamique sur un mélange azote/hélium.

<u>EXEMPLE 1.</u>

On introduit dans un récipient contenant du toluène sous agitation 0,02 g d'AiBN. Après dissolution complète de l'amorceur, on ajoute, toujours sous agitation 6,8 mL de divinylbenzène dans la solution. Le volume total de toluène dans la solution est de 43,1 mL. Le pourcentage en poids de divinylbenzène en solution est de 14,3 %. La proportion d'amorceur par rapport au nombre de fonctions éthyléniques est de 0,0014. Ces opérations s'effectuent à température ambiante, pour ne pas engendrer d'autoamorçage de la réaction et de décomposition thermique de l'amorceur.

On transvase ensuite la solution dans des moules en verre. Ces derniers sont ensuite placés dans un bain cryothermostaté à 85 °C, afin de démarrer la gélification. Le matériau obtenu après gélification puis séchage supercritique est un aérogel de densité comprise entre 0,14 et 0,15. La surface spécifique est estimée à 850 $m^2$/g. La texture est de type colloïdal.

<u>EXEMPLE 2.</u>

Dans cet exemple, le divinylbenzène est purifié, afin d'éliminer le P-tert-butylcatéchol, qui agit en tant qu'inhibiteur de polymérisation.

On ajoute dans un récipient contenant 5 mL de toluène, 0,0028 g d'AiBN sous agitation. Après dissolution complète de l'amorceur, on ajoute, toujours sous agitation, 0,241 mL de divinylbenzène dans la solution et on la complète avec le volume de solvant restant, le volume total de solvant étant de 10,76 mL. Le pourcentage en poids de divinylbenzène en solution est de 2,3 %. La proportion d'amorceur par rapport au nombre de fonctions éthyléniques est de 0,00558.

Ces opérations sont effectuées à température ambiante, pour les mêmes raisons que celles invoquées dans l'exemple 1. On transvase la solution dans des moules en verre. Ces derniers sont ensuite placés dans un bain cryothermostaté à 85 °C. Le matériau obtenu après gélification puis séchage supercritique est un aérogel de divinylbenzène de densité 0,04. La surface spécifique mesurée est estimée à 1000 $m^2$/g. La texture est de type colloïdal.

<u>EXEMPLE 3.</u>

Dans cet exemple, le divinylbenzène est purifié, afin d'éliminer le P-tert-butylcatéchol, qui agit en tant qu'inhibiteur de polymérisation.

On introduit sous agitation 0,0996 g d'AiBN dans un récipient contenant du toluène. Après dissolution complète de l'amorceur, on ajoute toujours sous agitation, 2,68 mL de divinylbenzène dans la solution et on la complète avec le volume de solvant restant, sachant que le volume total de solvant est de 32,32 mL. Le pourcentage en poids de divinylbenzène en solution est de 8 %. La proportion d'amorceur par rapport au nombre de fonctions éthyléniques est de 0,0179. Ces opérations s'effectuent à température ambiante, pour les mêmes raisons que celles invoquées dans l'exemple 1. On transvase ensuite la solution dans des moules en verre. Ces derniers sont ensuite placés dans un bain cryothermostaté à 75 °C. Le matériau obtenu après gélification puis séchage supercritique est-un aérogel de densité 0,085. La surface spécifique est estimée à 1000 $m^2$/g.

Les trois exemples mettent en évidence une corrélation directe de type linéaire entre le pourcentage massique de divinylbenzène dans la solution et la densité finale de l'aérogel.
Ainsi, dans le domaine étudié, nous avons, par exemple, la relation suivante :

$$d \approx 0{,}0083 * (\text{\% massique de divinylbenzène}) + 0{,}02$$

Les valeurs de densité finale d de l'aérogel en fonction du pourcentage massique de divinylbenzène, pour les trois exemples exposés précédemment, sont répertoriées dans le tableau 2 ci-dessous.

TABLEAU 2

| Exemple | 1 | 2 | 3 |
|---|---|---|---|
| % massique divinylbenzène | 14,3 | 8 | 2,3 |
| Densité finale de l' aérogel | 0,14 | 0,085 | 0,04 |

Les densités intermédiaires sont donc accessibles simplement en faisant varier le pourcentage massique de divinylbenzène.

La courbe représentée sur la figure unique met en évidence la relation linéaire entre densité finale d de l'aérogel et le pourcentage massique de divinylbenzène dans le milieu réactionnel.

De plus, la quantité d'amorceur semble avoir une influence, dans la présente invention, sur la surface spécifique du matériau. En effet, plus le nombre de moles d'amorceur est important, plus le nombre de sites réactionnels augmente. Il s'ensuit une augmentation du nombre de particules au détriment de leur taille, d'où l'augmentation de la surface spécifique.

Le tableau 3 ci-dessous, répertoriant, pour les trois exemples exposés précédemment, les valeurs de rapport du nombre de moles d'amorceur AiBn sur le nombre de moles de fonctions éthyléniques du divinylbenzène (nAiBn/nc=c) et la surface spécifique des aérogels obtenus illustre la remarque faite ci-dessus :

TABLEAU 3

| Exemple | 1 | 2 | 3 |
|---|---|---|---|
| nAiBn/nc=c | 0,0014 | 0,00558 | 0,0179 |
| Surface spécifique (en $m^2$/g) | 850 | 1000 | 1000 |

**Références citées**

[1] US 4997804.

[2] « Melamine-Formaldehyde Aerogels », Polym.Prepr, 32, (1991), 242.

[3] US 5 990 184.

[4] WO 95/03358.

[5] WO 96/36654.

[6] WO 96/37539.

**Revendications**

1. Aérogel à base d'un polymère obtenu par polymérisation d'au moins un monomère hydrocarboné aliphatique ou aromatique, éventuellement substitué par un ou plusieurs atomes d'halogène, ledit monomère comportant au moins deux fonctions éthyléniques.

2. Aérogel à base d'un copolymère obtenu par polymérisation d'au moins un monomère hydrocarboné aliphatique ou aromatique, éventuellement substitué par un ou plusieurs atomes d'halogène, ledit monomère comportant au moins deux fonctions éthyléniques, et d'au moins un comonomère polymérisable avec ledit monomère.

3. Aérogel selon la revendication 2, pour lequel le comonomère est choisi parmi le styrène, l'$\alpha$-méthylstyrène, l'éthylstyrène, l'anhydride maléique, l'acrylonitrile, les esters acryliques et les mélanges de ceux-ci.

4. Aérogel selon l'une quelconque des revendications 1 à 3, pour lequel le (les) monomère(s) hydrocarboné comportant au moins deux fonctions éthyléniques est (sont) un monomère aromatique.

5. Aérogel selon la revendication 4, pour lequel le monomère aromatique est un monomère styrénique.

6. Aérogel selon la revendication 5, pour lequel le monomère styrénique est choisi parmi les isomères méta ou para du divinylbenzène, le trivinylbenzène et les mélanges de ceux-ci.

7. Aérogel selon l'une quelconque des revendications 1 à 6, comportant, en outre, au moins l'un des additifs suivants choisis parmi les fibres minérales ou organiques, les mousses, les polymères tels que le polybutadiène.

8. Aérogel selon l'une quelconque des revendications précédentes, présentant une surface spécifique de 100 à 1500 $m^2/g$.

9. Aérogel selon l'une quelconque des revendications précédentes, présentant une taille de pores de 1 nanomètre à 1 micromètre.

10. Procédé de préparation d'un aérogel selon l'une quelconque des revendications 1 à 9, comprenant la succession d'étapes suivantes :

    a) formation d'un gel par polymérisation dans au moins un solvant organique d'un ou plusieurs monomères tels que définis dans la revendication 1 et éventuellement d'un ou plusieurs comonomères tels que définis dans la revendication 2 ; et
    b) séchage du gel obtenu en a) dans des conditions supercritiques.

11. Procédé de fabrication selon la revendication 10, dans lequel le ou les monomères ainsi que le ou les comonomères éventuels sont présents, dans l'étape a), à raison de 0,5 à 50 % en poids par rapport au poids du ou des solvants organiques utilisés dans l'étape a).

12. Procédé de fabrication selon la revendication 10 ou 11, dans lequel le ou les monomères ainsi que le ou les éventuels comonomères sont présents, dans l'étape a), à raison de 1 à 20 % en poids par rapport au poids du ou des solvants organiques utilisés dans l'étape a).

13. Procédé de préparation selon l'une quelconque des revendications 10 à 12, pour lequel la polymérisation est une polymérisation radicalaire.

14. Procédé de préparation selon la revendication 13, dans lequel la polymérisation radicalaire est amorcée par ajout pendant l'étape a) d'au moins un amorceur chimique.

15. Procédé de préparation selon la revendication 14, dans lequel l'amorceur chimique est choisi parmi l'azobisisobutyronitrile, le peroxyde de benzoyle, d'acétyle, de cumyle, de t-butyle, de lauryle, l'hydroperoxyde de t-butyle, le peracétate de t-butyle et les mélanges de ceux-ci.

**16.** Procédé de fabrication selon les revendications 14 ou 15, dans lequel l'amorceur chimique est présent à raison de $5.10^{-4}$ à 0,5 en proportion molaire par rapport au nombre de moles de fonctions éthyléniques du (des) monomère (s) et éventuellement du (des) comonomère(s).

**17.** Procédé de fabrication selon l'une quelconque des revendications 14 à 16, dans lequel la polymérisation radicalaire est effectuée à une température efficace pour assurer la décomposition thermique de l'amorceur chimique.

**18.** Procédé de préparation selon l'une quelconque des revendications 10 à 17, dans lequel les conditions supercritiques, lors du séchage de l'étape b), sont réalisées par du dioxyde de carbone supercritique.

**19.** Procédé de préparation selon la revendication 18, dans lequel le ou les solvants organique de l'étape a) sont miscibles au dioxyde de carbone.

**20.** Procédé de préparation selon la revendication 19, dans lequel le ou les solvants organiques de l'étape a) sont choisis parmi les hydrocarbures aliphatiques tels que l'hexane, l'heptane, le cyclohexane, les hydrocarbures aromatiques tels que le benzène, l'éthylbenzène, l'isopropylbenzène, le t-butylbenzène, le toluène, les cétones tels que l'acétone, les aldéhydes, les alcools tels que le butanol, les éthers tels que l'éther éthylique, les esters, les acides carboxyliques éventuellement halogénés tels que l'acide acétique, et les mélanges de ceux-ci.

**21.** Procédé de fabrication selon l'une quelconque des revendications 18 à 20, dans lequel le séchage par du $CO_2$ supercritique comprend successivement les étapes suivantes :

- échange du ou des solvants organiques contenus dans le gel préparé en a) par du $CO_2$ liquide ou supercritique
- extraction du $CO_2$ par application d'une température et d'une pression sensiblement supérieure au point critique du $CO_2$.

**22.** Matériau isolant thermiquement ou acoustiquement comprenant un aérogel selon l'une quelconque des revendications 1 à 9.

**23.** Membrane microporeuse comprenant un aérogel selon l'une quelconque des revendications 1 à 9.

**Claims**

**1.** Aerogel based on a polymer obtained by polymerization of at least one aliphatic or aromatic hydrocarbonaceous monomer optionally substituted by one or more halogen atoms, the said monomer comprising at least two ethylenic functional groups.

**2.** Aerogel based on a copolymer obtained by polymerization of at least one aliphatic or aromatic hydrocarbonaceous monomer optionally substituted by one or more halogen atoms, the said monomer comprising at least two ethylenic functional groups, and of at least one comonomer which can be polymerized with the said monomer.

**3.** Aerogel according to Claim 2, for which the comonomer is chosen from styrene, $\alpha$-methylstyrene, ethylstyrene, maleic anhydride, acrylonitrile, acrylic esters and the mixtures of these.

**4.** Aerogel according to any one of Claims 1 to 3, for which the hydrocarbonaceous monomer(s) comprising at least two ethylenic functional groups is (are) an aromatic monomer.

**5.** Aerogel according to Claim 4, for which the aromatic monomer is a styrene monomer.

**6.** Aerogel according to Claim 5, for which the styrene monomer is chosen from the meta or para isomers of divinylbenzene, trivinylbenzene and the mixtures of these.

**7.** Aerogel according to any one of Claims 1 to 6, additionally comprising at least one of the following additives chosen from inorganic or organic fibres, foams or polymers, such as polybutadiene.

**8.** Aerogel according to any one of the preceding claims, exhibiting a specific surface of 100 to 1500 $m^2/g$.

**9.** Aerogel according to any one of the preceding claims, exhibiting a pore size from 1 nanometre to 1 micrometre.

**10.** Process for the preparation of an aerogel according to any one of Claims 1 to 9, comprising the sequence of following stages:

a) formation of a gel by polymerization in at least one organic solvent of one or more monomers as defined in Claim 1 and optionally of one or more comonomers as defined in Claim 2; and
b) drying the gel obtained in a) under supercritical conditions.

**11.** Preparation process according to Claim 10, in which the monomer or monomers and the optional comonomer or comonomers are present, in step a), in a proportion of 0.5 to 50% by weight with respect to the weight of the organic solvent or solvents used in step a).

**12.** Preparation process according to Claim 10 or 11, in which the monomer or monomers and the optional comonomer or comonomers are present, in step a), in a proportion of 1 to 20% by weight with respect to the weight of the organic solvent or solvents used in step a).

**13.** Preparation process as claimed in any one of Claims 10 to 12, for which the polymerization is a radical polymerization.

**14.** Preparation process according to Claim 13, in which the radical polymerization is initiated by addition, during step a), of at least one chemical initiator.

**15.** Preparation process according to Claim 14, in which the chemical initiator is chosen from azobisisobutyronitrile, benzoyl, acetyl, cumyl, t-butyl and lauryl peroxide, t-butyl hydroperoxide, t-butyl peracetate and the mixtures of these.

**16.** Preparation process according to Claim 14 or Claim 15, in which the chemical initiator is present in a proportion of $5 \times 10^{-4}$ to 0.5 in molar proportion with respect to the number of moles of ethylenic functional groups of the monomer (s) and optionally of the comonomer(s).

**17.** Preparation process according to any one of Claims 14 to 16, in which the radical polymerization is carried out at a temperature which is effective in bringing about the thermal decomposition of the chemical initiator.

**18.** Preparation process according to any one of Claims 10 to 17, in which the supercritical conditions, during the drying of step b), are produced by supercritical carbon dioxide.

**19.** Preparation process according to Claim 18, in which the organic solvent or solvents of step a) are miscible with carbon dioxide.

**20.** Preparation process according to Claim 19, in which the organic solvent or solvents of step a) are chosen from aliphatic hydrocarbons, such as hexane, heptane or cyclohexane, aromatic hydrocarbons, such as benzene, ethylbenzene, isopropylbenzene, t-butylbenzene or toluene, ketones, such as acetone, aldehydes, alcohols, such as butanol, ethers, such as ethyl ether, esters, optionally halogenated carboxylic acids, such as acetic acid, and the mixtures of these.

**21.** Preparation process according to any one of Claims 18 to 20, in which the drying by supercritical $CO_2$ comprises, in succession, the following steps :

- exchange of the organic solvent or solvents present in the gel prepared in a) with liquid or supercritical $CO_2$
- extraction of the $CO_2$ by application of a temperature and of a pressure which are substantially greater than the critical point of $CO_2$.

**22.** Thermally or acoustically insulating material comprising an aerogel according to any one of Claims 1 to 9.

**23.** Microporous membrane comprising an aerogel according to any one of Claims 1 to 9.

**Patentansprüche**

**1.** Aerogel auf der Grundlage eines Polymers, erhalten durch Polymerisation wenigstens eines gegebenenfalls durch ein oder mehr Halogenatome substituierten aliphatischen oder aromatischen Kohlenwasserstoffmonomers, wobei das Monomer wenigstens zwei ethylenische Funktionen umfaßt.

**2.** Aerogel auf der Grundlage eines Copolymers, erhalten durch Polymerisation wenigstens eines gegebenenfalls durch ein oder mehr Halogenatome substituierten aliphatischen oder aromatischen Kohlenwasserstoffmonomers, wobei das Monomer wenigstens zwei ethylenische Funktionen umfaßt, und wenigstens eines Comonomers, das mit dem Monomer polymerisiert werden kann.

**3.** Aerogel gemäß Anspruch 2, für das das Comonomer aus Styrol, $\alpha$-Methylstyrol, Ethylstyrol, Maleinanhydrid, Acrylnitril, Acrylestern und deren Gemischen ausgewählt ist.

**4.** Aerogel gemäß einem der Ansprüche 1 bis 3, für das das (die) wenigstens zwei ethylenische Funktionen aufweisende (n) Kohlenwasserstoffmonomer(en) ein aromatisches (aromatische) Monomer(en) ist (sind).

**5.** Aerogel gemäß Anspruch 4, für das das aromatische Monomer ein Styrolmonomer ist.

**6.** Aerogel gemäß Anspruch 5, für das das Styrolmonomer aus den meta- oder para-Isomeren von Divinylbenzol, Trivinylbenzol und deren Gemischen ausgewählt ist.

**7.** Aerogel gemäß einem der Ansprüche 1 bis 6, das außerdem wenigstens eines der folgenden Additive umfaßt, die aus Mineralfasern oder organischen Fasern, Schaumstoffen und Polymeren wie etwa Polybutadien ausgewählt sind.

**8.** Aerogel gemäß einem der vorangehenden Ansprüche, das eine spezifische Oberfläche von 100 bis 1500 $m^2/g$ aufweist.

**9.** Aerogel gemäß einem der vorangehenden Ansprüche, das eine Porengröße von 1 Nanometer bis 1 Mikrometer aufweist.

**10.** Verfahren zur Herstellung eines Aerogels gemäß einem der Ansprüche 1 bis 9, das die Abfolge der folgenden Schritte umfaßt:

a) Bilden eines Gels durch Polymerisation in wenigstens einem organischen Lösungsmittel eines oder mehrerer in Anspruch 1 definierter Monomeren und gegebenenfalls eines oder mehrerer in Anspruch 2 definierter Comonomeren und
b) Trocknen des in a) erhaltenen Gels unter überkritischen Bedingungen.

**11.** Herstellungsverfahren gemäß Anspruch 10, bei dem das oder die Monomeren sowie das oder die gegebenenfalls vorhandenen Comonomeren in Schritt a) in einem Anteil von 0,5 bis 50 Gew.-% bezogen auf des Gewicht des oder der in Schritt a) verwendeten organischen Lösungsmittel vorliegen.

**12.** Herstellungsverfahren gemäß Anspruch 10 oder 11, bei dem das oder die Monomeren sowie das oder die gegebenenfalls vorhandenen Comonomeren in Schritt a) in einem Anteil von 1 bis 20 Gew.-% bezogen auf des Gewicht des oder der in Schritt a) verwendeten organischen Lösungsmittel vorliegen.

**13.** Herstellungsverfahren gemäß einem der Ansprüche 10 bis 12, bei dem die Polymerisation eine radikalische Polymerisation ist.

**14.** Herstellungsverfahren gemäß Anspruch 13, bei dem die radikalische Polymerisation durch Zugabe wenigstens eines chemischen Initiators während Schritt a) gestartet wird.

**15.** Herstellungsverfahren gemäß Anspruch 14, bei dem der chemische Initiator aus Azobisisobutyronitril, Benzoyl-, Acetyl-, Cumyl-, t-Butyl- oder Laurylperoxid, t-Butylhydroperoxid, t-Butylperacetat und deren Gemischen ausgewählt ist.

**16.** Herstellungsverfahren gemäß Anspruch 14 oder 15, bei dem der chemische Initiator in einem Molverhältnis von 5

x $10^{-4}$ bis 0,5 bezogen auf die Molzahl der ethylenischen Funktionen des (der) Monomers (Monomeren) und gegebenenfalls des (der) Comonomers (Comonomeren) vorliegt.

**17.** Herstellungsverfahren gemäß einem der Ansprüche 14 bis 16, bei dem die radikalische Polymerisation bei einer Temperatur durchgeführt wird, die zum Sicherstellen der thermischen Zersetzung des chemischen Initiators wirksam ist.

**18.** Herstellungsverfahren gemäß einem der Ansprüche 10 bis 17, bei dem die überkritischen Bedingungen während der Trocknung des Schritts b) durch überkritisches Kohlendioxid erreicht werden.

**19.** Herstellungsverfahren gemäß Anspruch 18, bei dem das oder die organischen Lösungsmittel des Schritts a) mit Kohlendioxid mischbar sind.

**20.** Herstellungsverfahren gemäß Anspruch 19, bei dem das oder die organischen Lösungsmittel des Schritts a) aus aliphatischen Kohlenwasserstoffen wie etwa Hexan, Heptan, Cyclohexan, aromatischen Kohlenwasserstoffen wie etwa Benzol, Ethylbenzol, Isopropylbenzol, t-Butylbenzol, Toluol, Ketonen wie etwa Aceton, Aldehyden, Alkoholen wie etwa Butanol, Ethern wie etwa Ethylether, Estern, gegebenenfalls halogenierten Carbonsäuren wie etwa Essigsäure und deren Gemischen ausgewählt sind.

**21.** Herstellungsverfahren gemäß einem der Ansprüche 18 bis 20, bei dem das Trocknen durch überkritisches $CO_2$ nacheinander die folgenden Schritte umfaßt:

- Austausch des oder der in dem in a) hergestellten Gel vorhandenen organischen Lösungsmittel gegen flüssiges oder überkritisches $CO_2$,
- Extraktion des $CO_2$ durch Anwenden einer Temperatur und eines Drucks, die wesentlich größer als der kritische Punkt von $CO_2$ sind.

**22.** Wärme- oder schallisolierendes Material umfassend ein Aerogel gemäß einem der Ansprüche 1 bis 9.

**23.** Mikroporöse Membran umfassend ein Aerogel gemäß einem der Ansprüche 1 bis 9.

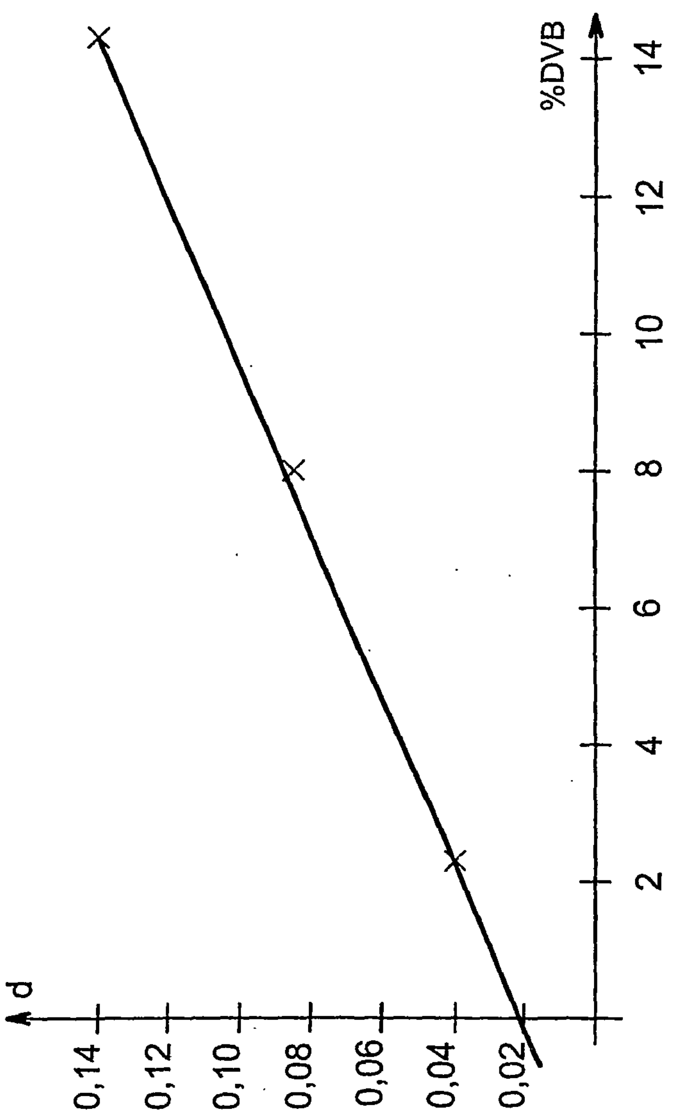
d
0,14
0,12
0,10
0,08
0,06
0,04
0,02
%DVB
2
4
6
8
10
12
14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4997804 A
- US 5990184 A
- WO 9503358 A
- WO 9636654 A
- WO 9637539 A


### Littérature non-brevet citée dans la description


- Melamine-Formaldehyde Aerogels. *Polym.Prepr,* 1991, vol. 32, 242